# EUROPÄISCHE PATENTSCHRIFT

(11) **EP 3 529 561 B1**
(45) Veröffentlichungstag und Bekanntmachung des Hinweises auf die Patenterteilung: **09.12.2020**
(21) Anmeldenummer: 17793867.7
(22) Anmeldetag: 17.10.2017
(51) Int. Cl.: G01C 21/32, G06K 9/00

(54) **SYSTEM UND VERFAHREN ZUR ERZEUGUNG VON DIGITALEN STRASSENMODELLEN AUS LUFT- ODER SATELLITENBILDERN UND VON FAHRZEUGEN ERFASSTEN DATEN**
SYSTEM AND METHOD FOR GENERATING DIGITAL ROAD MODELS FROM AERIAL OR SATELLITE IMAGES AND FROM DATA CAPTURED BY VEHICLES
SYSTÈME ET PROCÉDÉ PERMETTANT DE PRODUIRE DES MODÈLES ROUTIERS NUMÉRIQUES À PARTIR D'IMAGES AÉRIENNES ET SATELLITAIRES ET DE DONNES COLLECTÉES PAR DES VÉHICULES

(30) Priorität: 18.10.2016 DE 102016220308
(43) Veröffentlichungstag der Anmeldung: 28.08.2019
(73) Patentinhaber: Continental Automotive GmbH, 30165 Hannover (DE)
(72) Erfinder: HAMER, Henning, 81543 München (DE); KRISTENSEN, Steen, 88161 Lindenberg im Allgäu (DE)
(86) Internationale Anmeldenummer: PCT/EP2017/076503
(87) Internationale Veröffentlichungsnummer: WO 2018/073260

(56) Entgegenhaltungen:
- US-A1- 2015 106 010
- US-A1- 2016 239 983
- US-A1- 2017 116 477

## Beschreibung

### Gebiet der Technik

Die vorliegende Erfindung betrifft die Erzeugung von digitalen Straßenmodellen mittels einer Kombination aus Luft- oder Satellitenbildern, die eine im Wesentlichen senkrechte Draufsicht auf einen Teil einer Landschaft aus der Vogelperspektive repräsentieren, und von Fahrzeugen beim Befahren von Straßen erfassten Daten, beispielsweise Kamerabilder oder Daten von abtastenden Sensoren, also Radar, Lidar, Ultraschall und dergleichen.

### Stand der Technik

Digitale Straßenmodelle sind für viele Einsatzzwecke im Bereich Mobilität erforderlich, zum Beispiel für Navigationssysteme, Fahrerunterstützungssysteme, autonom fahrende Fahrzeuge. Insbesondere für Fahrerunterstützungssysteme und autonom fahrende Fahrzeuge ist eine allgemein hohe Genauigkeit und eine möglichst große Anzahl markanter Merkmale auf oder entlang der Straße in den digitalen Straßenmodellen nötig, um eine im Vergleich zu bekannten Positionierungsverfahren wie Satellitennavigation oder Koppelverfahren genauere Positionsbestimmung zu ermöglichen.

Anbieter von digitalen Straßenmodellen lassen für die Erfassung und Aktualisierung der den Straßenmodellen zugrunde liegenden Daten spezielle, mit einer Reihe unterschiedlicher Sensoren ausgestatteter Fahrzeuge über die Straßen fahren. Da die Anzahl der für diese Zwecke eingesetzten Fahrzeuge klein ist, kann eine Aktualisierung der Straßendaten eine längere Zeit benötigen. Außerdem sind die Positionsdaten der Fahrzeuge wegen der Ungenauigkeit der Positionierungssensoren häufig ungenau, so dass sich insgesamt ein ungenaues digitales Stra-ßenmodell ergibt.

Die Erzeugung eines digitalen Straßenmodells aus Luft- oder Satellitenaufnahmen erfordert ein Zusammenfügen von einzelnen Bildern. Während ein Zusammenfügen bei ausreichender Bildauflösung und Überlappung möglich erscheint ist dies bei Lücken in der Erfassung nur bedingt möglich; auf jeden Fall können in den Anschlüssen Unstetigkeiten entstehen, welche die Genauigkeit des Gesamtmodells herabsetzen. Auch Verzerrungen durch die verwendeten Optiken, insbesondere an den Rändern eines Bildes, und unterschiedliche Auflösungen bei Bildern aus unterschiedlichen Quellen erschweren ein hochgenaues Zusammenfügen von Luft- oder Satellitenbildern. Schließlich muss in den zusammengesetzten Bildern noch eine aufwendige Suche nach Straßen und Wegen erfolgen, ohne dass fälschlicherweise Flüsse oder Kanäle als Straßen erkannt werden, und ohne dass durch Bäume verdeckte Straßen übersehen werden.

US 2015/106010 A1 betrifft ein Verfahren, bei dem ein Luftbild empfangen wird. Ein Teil des Luftbilds wird identifiziert, der einen interessierenden Bereich darstellt, der ein Fahrzeug umfasst. Der Teil des Luftbildes wird analysiert, um eine Identifikation eines oder mehrerer Objekte in dem interessierenden Bereich in Bezug auf eine Route des Fahrzeugs zu erzeugen.

US 2016/239983 A1 betrifft ein Verfahren zum Erzeugen einer Kartengeometrie auf der Grundlage eines empfangenen Bildes und von Sondendaten.

### Zusammenfassung der Erfindung

Es ist eine Aufgabe der Erfindung, ein System und ein Verfahren anzugeben, die eine Erzeugung und eine zeitnahe Aktualisierung hochgenauer digitaler Straßenmodelle ermöglichen.

Diese Aufgabe wird gelöst durch das in den unabhängigen Ansprüchen angegebene System bzw. Verfahren. Vorteilhafte Ausgestaltungen des Systems bzw. des Verfahrens sind in entsprechenden abhängigen Ansprüchen angegeben.

### Begriffserklärungen

Im Kontext dieser Beschreibung entspricht eine Trajektorie einer Reihe von Wegpunkten, an denen ein Fahrzeug sich zu einem Zeitpunkt tatsächlich auf einer Fahrbahn oder Straße befunden hat. Jeder Wegpunkt kann beispielsweise durch relative Koordinaten eindeutig bestimmt sein, z. B. repräsentiert durch einen Vektor der einen Abstand und eine Richtung des jeweiligen Wegpunktes in Bezug zu einem Straßenrand oder einer Markierung auf oder an der Fahrbahn oder Straße, oder zu einem anderen eindeutig lokalisierbaren Referenzpunkt beschreibt. Für diese Art der Bestimmung der Position kann beispielsweise ein bildgebender Sensor des Fahrzeugs verwendet werden, beispielsweise eine Kamera oder ein abtastendes Lidar-System. Eine Erkennung von Straßenmarkierungen kann z. B. durch Erkennung von Farbunterschieden zwischen der Fahrbahnoberfläche und der Markierung erfolgen, oder durch Erkennung abweichender Oberflächenstrukturen. Die Beschreibung der erkannten Markierungen kann durch entsprechende Merkmale oder Parameter erfolgen, die für eine Relativpositionierung geeignet sind. Eine Bestimmung von Wegpunkten einer ersten Trajektorie kann aber auch durch Ermittlung absoluter Koordinaten erfolgen, wie sie beispielsweise von einem Satellitennavigationssystem bereitgestellt werden. Andere Systeme und Verfahren zur Bestimmung einer Position können ebenfalls angewendet werden, beispielsweise Positionsermittlung durch Erfassen von Beschleunigung und Verzögerung über die Zeit, Erfassen des Lenkwinkels, der Geschwindigkeit, oder Kombinationen unterschiedlicher Verfahren zur Erhöhung der Genauigkeit. Bei nicht-kontinuierlicher Erfassung der Wegpunkte kann eine Trajektorie durch Verbinden der Wegpunkte angenähert werden, beispielsweise durch einer Polynomialfunktion folgende Kurven oder spline-artige Linien. Eine erste Trajektorie kann einen Anfang und ein Ende aufweisen; eine bestimmte Länge ist jedoch nicht zwingend vorgegeben.

Im Kontext dieser Beschreibung umfassen fahrrelevante oder positionierungsrelevante Merkmale einer Straße unter anderem Fahrbahnmarkierungen, auffällige Geometrien von Fahrbahnen oder Fahrspuren, Positionen von Bordsteinen, Gullideckeln, Straßen- und Eisenbahnschienen, etc.. Wenn sich aus dem Kontext nichts anderes ergibt, ist die Bezeichnung fahrrelevant dabei austauschbar mit der Bezeichnung positionierungsrelevant, weil für das Fahren relevante Merkmale der Straße üblicherweise auch für eine Bestimmung der Position eines Fahrzeugs verwendet werden können, und umgekehrt.

Ein erfindungsgemäßes System zur Erzeugung und zeitnahen Aktualisierung hochgenauer digitaler Straßenmodelle umfasst neben einer Datenbank zum abrufbaren Speichern von Trajektorien und Bildern ein erstes Modul zum Empfangen mindestens einer Trajektorie eines Fahrzeugs für den mindestens einen Straßenabschnitt und zum Speichern der mindestens einen Trajektorie in der Datenbank. Ein zweites Modul des Systems ist eingerichtet zum Empfangen mindestens eines Bildes, das zumindest Teile des mindestens einen Straßenabschnitts zeigt, wobei das Bild eine Perspektive aufweist, die einem von einer erhöhten Position im Wesentlichen senkrecht nach unten aufgenommenen Bild entspricht, und zum Speichern des mindestens einen Bildes in der Datenbank. Die Module zum Empfangen von Trajektorien oder Bildern können eine oder mehrere digitale Datenschnittstellen mit Sendern und/oder Empfängern umfassen, welche zu einem oder mehreren Telekommunikationsstandards kompatibel ausgebildet sind und mit anderen Komponenten des Systems kommunikativ verbunden sind.

Ein drittes Modul des Systems ist eingerichtet zum Überlagern der mindestens einen Trajektorie mit dem mindestens einen Bild dergestalt, dass die mindestens eine Trajektorie mit dem Verlauf einer Straße in dem mindestens einen Bild übereinstimmt. Das System umfasst außerdem ein viertes Modul zum Analysieren des mindestens einen Bildes in einem Korridor der sich entlang der Trajektorie erstreckt und diese einschließt, und Erkennen von fahr- oder positionierungsrelevanten Merkmalen des Straßenabschnitts in dem Korridor, und ein fünftes Modul zum Erzeugen des digitalen Straßenmodells aus den fahr- oder positionierungsrelevanten Merkmalen, die in dem mindestens einen anhand der mindestens einen Trajektorie ausgerichteten Bild und in dem die Trajektorie einschließenden Korridor erkannt wurden.

Ein fünftes Modul des Systems ist eingerichtet zum Erzeugen des digitalen Straßenmodells aus den fahr- oder positionierungsrelevanten Merkmalen, die in dem mindestens einen anhand der mindestens einen Trajektorie ausgerichteten Bild und in dem die Trajektorie einschließenden Korridor erkannt wurden.

Mindestens zwei Module des Systems sind über entsprechende physikalische oder logische Schnittstellen und/oder Bussysteme zum Datenaustausch kommunikativ miteinander verbunden. Ein oder mehrere der Module des Systems können einen oder mehrere Computer umfassen, welcher oder welche ein entsprechendes Computerprogramm ausführen, das den von dem jeweiligen Modul ausgeführten Teil des erfindungsgemäßen Verfahrens zur Erstellung eines digitalen Straßenmodells für mindestens einen Straßenabschnitt implementiert. Ein oder mehrere der Module des Systems können jedoch auch als entsprechende Computerprogramme implementiert sein, von denen mehrere in einem Computer ausgeführt werden und zusammen wirken, um zumindest Teile des erfindungsgemäßen Verfahrens auszuführen.

Das System kann auch als aus einem oder mehreren Funktionsblöcken im Sinne einer Funktions-Modul-Architektur gebildet aufgefasst werden. Dabei repräsentieren jeweilige Funktionsblöcke Mittel zur Ausführung entsprechender Funktionen. Die Mittel können, wie bei den Modulen erläutert, durch ein oder mehrere, durch ein Computerprogramm zur Durchführung entsprechender Funktionen eingerichtete Computer oder Datenverarbeitungseinheiten implementiert sein.

Die ein oder mehreren Computer des Systems können ein oder mehrere Mikroprozessoren umfassen, welche mit Arbeitsspeicher und/oder nicht-flüchtigen Speichermitteln sowie anderen Systemkomponenten über ein oder mehrere Datenbusse kommunikativ verbunden sind, die vor und/oder während der Ausführung von Computerprogramminstruktionen Daten empfangen und/oder senden, wodurch die Computer oder Verarbeitungseinheiten zumindest Teile des Verfahrens ausführen. Die nicht-flüchtigen Speichermittel umfassen unterschiedliche Speichermedien, z. B. optische oder magnetische Speicher, Phase-Change- oder Flash-Speicher. Mehrere Module oder Funktionsblöcke können in einem Computer oder einer Datenverarbeitungseinheit implementiert sein.

Das oder die Computerprogramminstruktionen, die jeweilige Teile des erfindungsgemäßen Verfahrens implementieren, können auf einem oder mehreren Datenträgern oder in Speichermitteln gespeichert sein. Die Computerprogramminstruktionen können in die Speichermittel unter Verwendung drahtlos oder mittels Kabeln oder Leitungen verbundener Schnittstellen übertragen werden. Die Computerprogramminstruktionen liegen außerhalb des Systems als Computerprogrammprodukt vor, welches dauerhaft auf einem computerlesbaren Medium oder maschinenlesbaren Medium gespeichert ist, und welches als auf einem Trägermedium gespeichertes Computerprogramm aufgefasst werden kann.

Das Computerprogrammprodukt kann auch in einer nicht dauerhaften, vorübergehenden Form vorliegen, z. B. als ein elektromagnetisches oder optisches Signal, welches die Computerprogramminstruktionen durch seine Modulation vorübergehend repräsentiert. Durch die Modulation werden dem Signal mithin die Computerprogramminstruktionen vorübergehend auslesbar aufgeprägt, beispielsweise während der Übertragung der Computerprogramminstruktionen von einem Datenträger in das System. In diesem Fall stellt das Signal, z. B. repräsentiert durch einen modulierten Träger, eine konkrete Verkörperung des Computerprogrammprodukts dar, von der es entnommen oder abgegriffen werden kann.

Ein in einer fahrzeugexternen Datenbank ausgeführtes erfindungsgemäßes Verfahren zur Erstellung eines digitalen Stra-ßenmodells für mindestens einen Straßenabschnitt umfasst das Empfangen mindestens einer Trajektorie eines Fahrzeugs für den mindestens einen Straßenabschnitt. Wenn mehrere Trajektorien für denselben Streckenabschnitt für dieselbe Fahrspur und dieselbe Fahrtrichtung von einer Vielzahl von Fahrzeugen empfangen werden, können diese mit statistischen Verfahren zu einer einzigen Trajektorie zusammengefasst werden, bevor die resultierende Trajektorie für die Zwecke des Verfahrens verwendet wird. Geeignete statistische Verfahren umfassen unter anderem die Bildung einer mittleren Trajektorie oder einer Median-Trajektorie, die aus quer zu einer Fahrtrichtung liegenden Positionswerten einer Vielzahl von Trajektorien für entsprechende Positionen in einer Längsrichtung entlang des Streckenabschnitts gebildet wird.

Außerdem wird mindestens ein Bild empfangen, das zumindest Teile des Straßenabschnitts zeigt, in dem die Trajektorie liegt, wobei das Bild eine Perspektive aufweist, die einem von einer erhöhten Position im Wesentlichen senkrecht nach unten aufgenommenes Bild entspricht. Ein solches Bild kann beispielsweise eine Luftaufnahme oder eine Satellitenaufnahme sein, oder allgemein ein Bild, das einer Draufsicht von oben entspricht. Wenn ein Bild keine Perspektive aufweist, die einen im Wesentlichen senkrechten Blick nach unten entspricht, kann ein schräg nach unten aufgenommenes Bild auch durch Anwendung entsprechender Transformationen in ein Bild umgerechnet werden, dass die gewünschte Perspektive aufweist.

Die mindestens eine Trajektorie wird mit dem mindestens einen Bild dergestalt überlagert, dass die mindestens eine Trajektorie mit dem Verlauf einer Straße in dem mindestens einen Bild übereinstimmt. Um die Trajektorie und den Verlauf einer Straße zur Übereinstimmung zu bringen können neben Verschiebungen oder Drehungen der Bilder oder der Trajektorie auch Streckungen oder Stauchungen in einer oder zwei Dimensionen durchgeführt werden. Wenn eine Trajektorie sich über mehrere Bilder erstreckt, die aneinander grenzen oder sich teilweise überlappen, kann die Trajektorie mit jedem dieser Bilder jeweils separat überlagert werden und die Bilder dann anhand der Trajektorie zueinander ausgerichtet werden, so dass sich nach erfolgter Überlagerung ein aus einzelnen Bildern zusammengesetztes Gesamtbild ergibt. Wenn eine Trajektorie sich über mehrere Bilder erstreckt, die keine gemeinsame Kante haben oder keine Überlappung aufweisen, kann der entsprechende Bereich im Gesamtbild frei bleiben.

Das mindestens eine Bild oder das Gesamtbild wird einer Bildanalyse unterworfen, die fahrrelevante Merkmale des mindestens einen Straßenabschnitts erkennt. Dabei wird die Analyse nur in einem Bereich des Bildes durchgeführt, der sich entlang der Trajektorie über eine erste Distanz ein- oder beidseitig quer zu der Trajektorie erstreckt, also quasi einen Korridor oder eine Einhüllende um die Trajektorie legt. Erkannte fahr- oder positionierungsrelevante Merkmale in aneinander grenzenden oder überlappenden Bildbereichen können zur noch genaueren Ausrichtung der Bilder zueinander verwendet werden, z. B. durchgehende Straßenmarkierungen, Seitenlinien, Bordsteinkanten oder Leitplanken.

Aus den fahr- oder positionierungsrelevanten Merkmalen des Straßenabschnitts, die in dem mindestens einen anhand der mindestens einen Trajektorie ausgerichteten Bild und in dem die Trajektorie einschließenden Korridor erkannt wurden, wird schließlich das digitale Straßenmodell erzeugt. Das digitale Straßenmodell kann in unterschiedlichen Formen vorliegen, beispielsweise als Vektormodell, bei dem die Straßenränder und andere Merkmale, die bei der Positionsbestimmung eines Fahrzeugs verwendet werden können, als Objekte in Vektordarstellung mit ihren relativen Positionen zueinander gespeichert sind. Dazu können die einzelnen Objekte einen oder mehrere Referenzpunkte aufweisen, deren Abstand und Winkel zu anderen Objekten bestimmt sind, und/oder deren absolute Positionen auf der Erdoberfläche bekannt sind.

Eine Höhenkomponente des digitalen Straßenmodells, auch als Z-Komponente oder Relief-Komponente bezeichnet, kann bei einem Aspekt des vorliegenden Verfahrens aus Daten der mindestens einen Trajektorie, aus einer Topographiedatenbank oder einem digitalen Höhenmodell ergänzt werden.

Gemäß einem Aspekt des vorliegenden Verfahrens werden zusätzlich zu der mindestens einen Trajektorie Informationen zu durch das Fahrzeug erfassten fahr- oder positionierungsrelevanten Merkmalen des Straßenabschnitts empfangen. Die Informationen können beispielsweise als Bilder einer Kamera oder eines abtastenden Sensors wie bspw. Radar-, Lidar- oder Ultraschallsensoren übertragen werden. Die Merkmale umfassen z. B. Markierungen auf der Straße, Begrenzungspfosten, Verkehrszeichen, oder andere vergleichbare nur langsam oder unveränderliche Merkmale. Die Informationen oder die Merkmale sind mit Informationen zu jeweiligen Erfassungsorten oder - positionen versehen, so dass die empfangenen Informationen oder Merkmale zur Ausrichtung der empfangenen Bilder verwendet oder in das digitale Straßenmodell übernommen werden können. Die empfangenen Informationen zu fahr- oder positionierungsrelevanten Merkmalen des Straßenabschnitts können beispielsweise bei aneinander grenzenden Bildern verwendet werden, diese genauer zueinander auszurichten, beispielsweise wenn ein Merkmal ganz oder teilweise in beiden Bildern erkennbar ist.

Bei einem Ausführungsbeispiel des vorstehend erläuterten Aspekts werden die zusätzlich empfangenen Informationen in einem objektbeschreibenden Vektorformat empfangen. Bei diesem Ausführungsbeispiel wertet das Fahrzeug die Sensordaten aus und erzeugt von fahrrelevanten Merkmalen Vektormodelle von Merkmalen, und bestimmt optional für jedes Vektormodell mindestens einen Referenzpunkt. Die in dem objektbeschreibenden Vektorformat empfangenen Informationen können ebenfalls zur Ausrichtung mit den empfangenen Bildern verwendet oder in das digitale Straßenmodell übernommen werden. Wenn zum Beispiel bereits ein digitales Straßenmodell eines Straßenabschnitts existiert, und neue Informationen über Merkmale in einem objektbeschreibenden Vektorformat empfangen werden, kann eine Ausrichtung der in dem objektbeschreibenden Vektorformat repräsentierten Merkmale geringerem Rechenaufwand erfolgen, als es bei einer anderen Darstellung möglich wäre. Wenn Informationen zu mehreren in einem solchen Format vorliegenden Merkmalen inklusive ihrer relativen Positionierung zueinander empfangen wurden kann durch Ausrichtung der Vektormodelle an dem digitalen Straßenmodell eine Ungenauigkeit der bei der Erfassung verwendeten Positionierung kompensiert werden.

Bei einem Aspekt des Verfahrens wird ein erfindungsgemäß erzeugtes digitales Straßenmodell beispielsweise als Vektormodell an Fahrzeuge übertragen, deren Trajektorien empfangen wurden. Bei geeigneter Ausrüstung des jeweiligen Fahrzeugs mit Sensoren und zur Auswertung von Bildern geeigneten Computern können in dem objektbeschreibenden Vektorformat vorliegende Informationen zu Merkmalen des Straßenabschnitts zur Verbesserung der Genauigkeit bei der Bestimmung der Fahrzeugposition verwendet werden. Dies führt entsprechend zu einer Verbesserung der Genauigkeit der Trajektorie. Dadurch wird es möglich, einen erfindungsgemäß zu analysierenden Bereich weiter einzuschränken, beispielsweise auf eine Fahrspur einer mehrspurigen Straße, und in dem eingeschränkten Bereich eine genauere Analyse vorzunehmen.

Das vorliegende Verfahren und das entsprechende System vereinfachen die Erkennung und Extraktion von Straßen und Stra-ßenmerkmalen in Satelliten- und Luftaufnahmen und verringern dabei die Fehleranfälligkeit. Auch die Ausrichtung und das Zusammensetzen von Luft- oder Satellitenaufnahmen zueinander wird vereinfacht, beispielsweise wenn eine Trajektorie sich über mehrere aneinander angrenzende oder überlappende Bilder erstreckt. Hierbei kann auf die Verwendung von markanten, an einem Weg liegenden Punkten verzichtet werden, wie sie beispielsweise von Fahrzeugen bei der Bestimmung ihrer Position mittels Triangulation verwendet werden. Die von den Fahrzeugen verwendeten markanten Punkte, auch als Landmarks bezeichnet, sind üblicherweise aus einer Perspektive angegeben, die ein Fahrzeug einnehmen kann, während Luft- oder Satellitenaufnahmen in der Regel eine völlig andere Sicht auf Landmarks bieten. Selbst wenn die Darstellung von Landmarks grundsätzlich in eine andere Perspektive umgerechnet werden kann, können sich dabei Ungenauigkeiten ergeben. Eine Fahrzeugtrajektorie ist hingegen zumindest stückweise in sich hinreichend genau, weist in der Regel keine Unstetigkeiten auf und liegt darüber hinaus auch schon in einer Ebene vor, so dass ein Ausrichten von Luft- oder Satellitenaufnahmen weniger Transformationen benötigt. Da die Fahrzeugtrajektorie zunächst nur für die Bestimmung eines Korridors verwendet wird, innerhalb dessen dann eine Analyse der Luftaufnahmen erfolgt, ist die initial geforderte Genauigkeit auch nicht besonders groß. Außerdem kann bei Bedarf aus einer Vielzahl von Fahrzeugtrajektorien für denselben Streckenabschnitt eine allgemeine Trajektorie ermittelt werden, die dann zur Bestimmung des Analysekorridors verwendet wird. Die Überlagerung der Trajektorie führt auch dann eher zum Erfolg, wenn nur Teile der Trajektorie mit in einer Luft- oder Satellitenaufnahme erkennbaren Straßen in Übereinstimmung gebracht werden können, beispielsweise wenn eine Straße in der Luft- oder Satellitenaufnahme stück- oder teilweise von Bäumen verdeckt wird und so nicht sofort als Straße erkennbar ist. Innerhalb des um die Trajektorie herum liegenden Korridors kann dennoch eine Detailanalyse vorgenommen werden, um teilweise sichtbare Merkmale zu erkennen.

### Kurze Beschreibung der Zeichnung

Im Folgenden werden Aspekte der Erfindung mit Bezug auf die Zeichnung beschrieben. In der Zeichnung zeigt
- Fig. 1: eine erste beispielhafte Darstellung einer Luftaufnahme und einer Trajektorie,
- Fig. 2: eine Darstellung der Luftaufnahme aus Figur 1, bei der die Trajektorie mit einer in der Luftaufnahme erkennbaren Straße zur Übereinstimmung gebracht wurde,
- Fig. 3: eine beispielhafte Darstellung eines Korridors um die Trajektorie, innerhalb dessen nach Merkmalen der Straße gesucht wird,
- Fig. 4: in einem vergrößerten Bildausschnitt einen Teil des Korridors aus Figur 3,
- Fig. 5: ein beispielhaftes Blockschaltbild eines erfindungsgemäßen Systems,
- Fig. 6: ein beispielhaftes Blockschaltbild eines Moduls des erfindungsgemäßen Systems und
- Fig. 7: ein vereinfachtes beispielhaftes Flussdiagramm eines erfindungsgemäßen Verfahrens.

### Beschreibung der Ausführungsbeispiele

In den Figuren der Zeichnung sind gleiche oder ähnliche Elemente mit den gleichen Bezugszeichen bezeichnet.

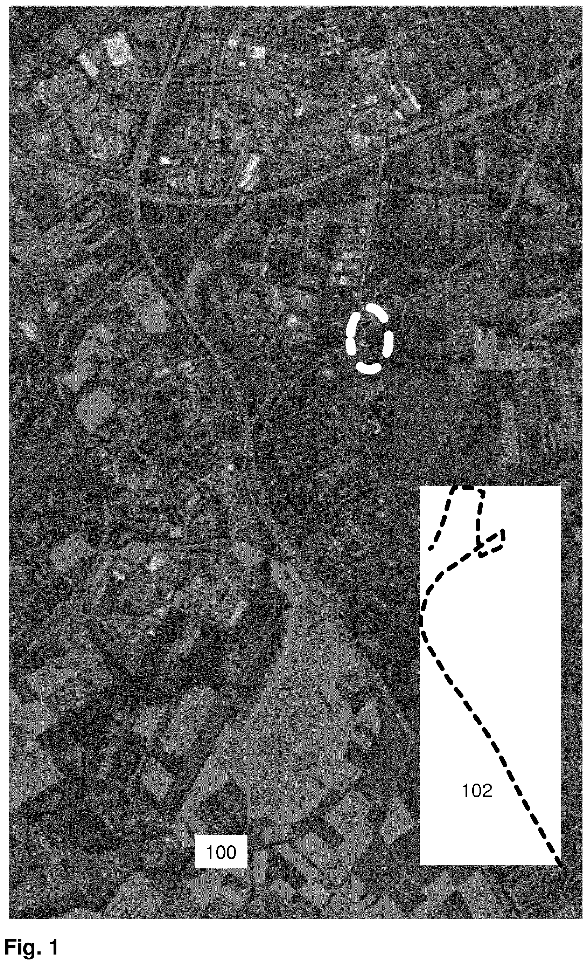

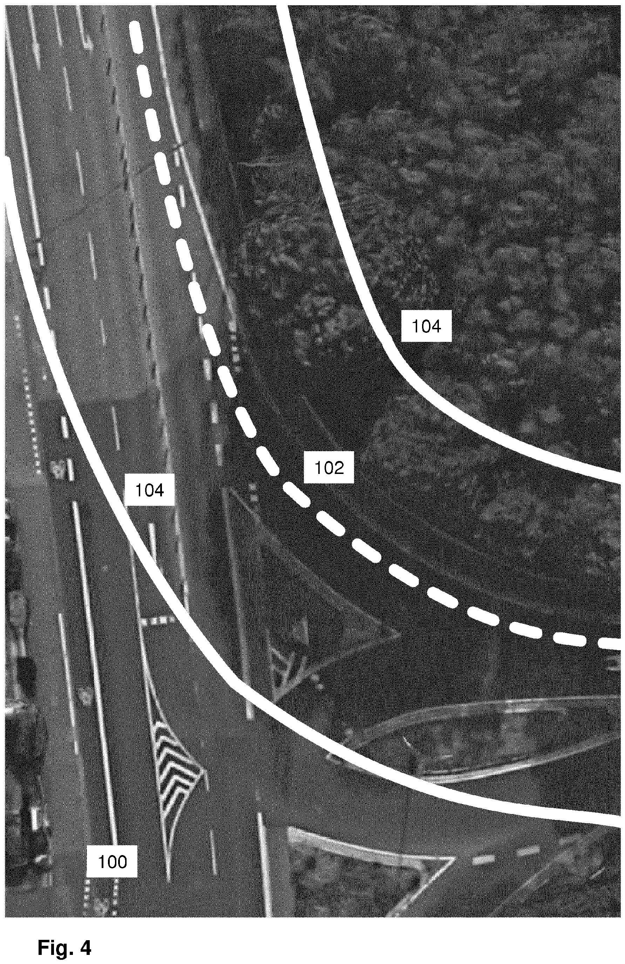

Figur 1 zeigt eine erste beispielhafte Darstellung einer Luftaufnahme 100 und einer von einem Fahrzeug aufgezeichneten Trajektorie 102, die von einem erfindungsgemäßen System empfangen wurden. Die Trajektorie 102 ist ohne Maßstab dargestellt und aus Gründen der besseren Sichtbarkeit auf einem weißen Hintergrund dargestellt. Das System führt Verfahrensschritte aus, um die Trajektorie mit einer in der Luftaufnahme abgebildeten Straße zur Übereinstimmung zu bringen. Dazu kann eine Anfangspositionierung mittels Absolutkoordinaten, z. B. aus einem Satellitennavigationssystem, erfolgen, wodurch das Auffinden einer Straße mit einem zu der Trajektorie passenden Verlauf vereinfacht und beschleunigt wird. Die Verfahrensschritte umfassen unter anderem zumindest stückweise lineare Dehnungs- und Stauchungsoperationen, aber auch Rotationsoperationen. Das gestrichelte Oval in der oberen Bildhälfte kennzeichnet den Bildausschnitt, der in Figur 4 vergrößert dargestellt ist.

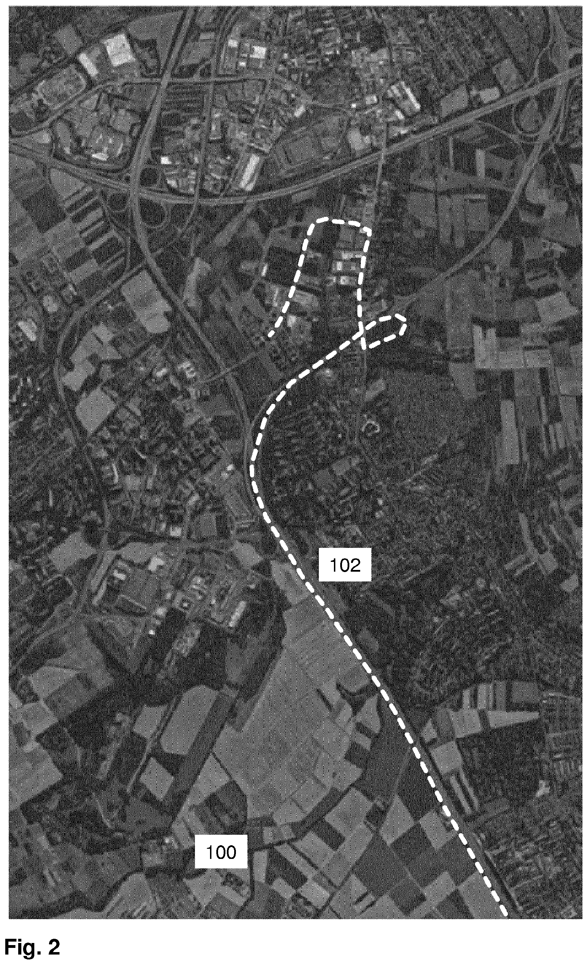

Figur 2 zeigt eine Darstellung der Luftaufnahme aus Figur 1, bei der die Trajektorie 102 mit einer in der Luftaufnahme 100 erkennbaren Straße zur Übereinstimmung gebracht wurde. Im Vergleich zu Figur 1 ist klar erkennbar, dass die Trajektorie 102 durch eine Dehnungsoperation in zwei Dimensionen vergrößert wurde, um zu dem Straßenverlauf zu passen.

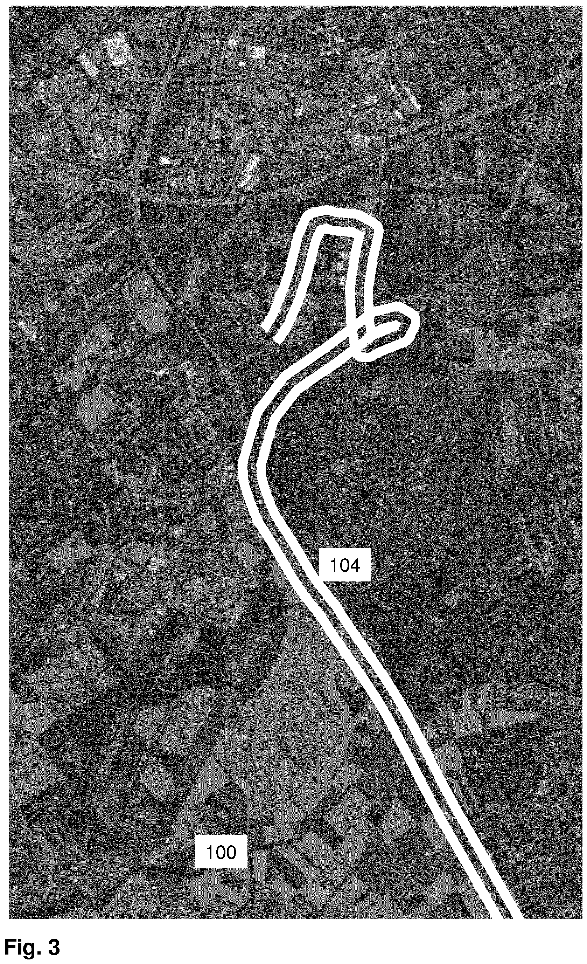

Figur 3 zeigt eine beispielhafte Darstellung eines Korridors 104 um die Trajektorie 102, innerhalb dessen nach Merkmalen der Straße gesucht wird. Der Korridor 104 ist durch die parallel verlaufenden Linien dargestellt, die die Trajektorie 102 (nicht gezeigt) und die Straße einschließen.

Figur 4 zeigt in einem vergrößerten Bildausschnitt einen Teil des Korridors aus Figur 3. Es ist klar erkennbar, dass die Trajektorie 102 auf einer Fahrspur der Straße verläuft. Die äußeren Begrenzungen des Korridors 104 verlaufen parallel zu der Trajektorie und schließen große Teile der Straße ein. Eine Auswertung der Luftaufnahme zur Erkennung von Merkmalen der Straße, die zur Positionierung von Fahrzeugen verwendet werden können, beispielsweise Fahrbahnmarkierungen, erfolgt nur innerhalb des Korridors 104, wodurch der Aufwand für die Erkennung stark reduziert und das Ergebnis zuverlässiger wird, weil beispielsweise falsche Zuordnungen leichter vermieden werden können.

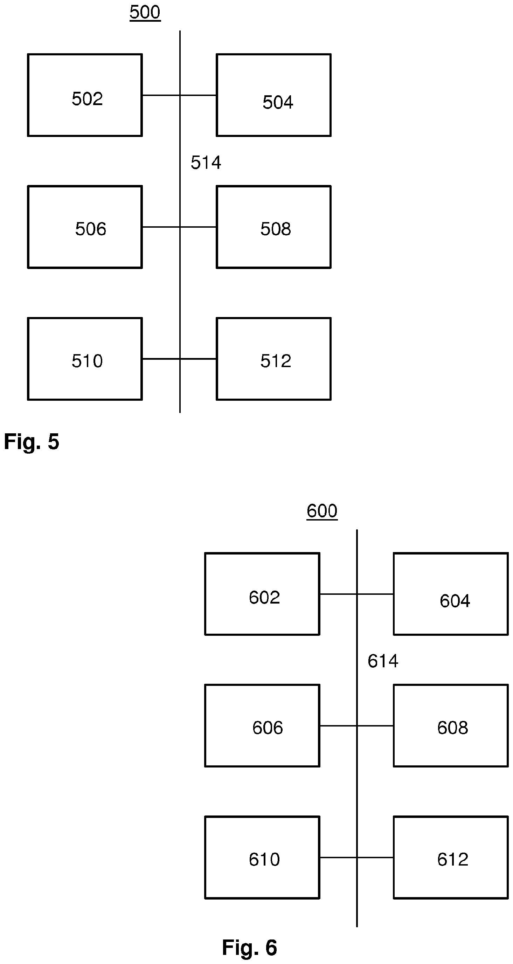

Figur 5 zeigt ein beispielhaftes Blockschaltbild eines Teils 500 des erfindungsgemäßen Systems. Eine Datenbank 502, ein erstes Modul 504 zum Empfangen mindestens einer Trajektorie eines Fahrzeugs für den mindestens einen Straßenabschnitt und zum Speichern der mindestens einen Trajektorie in der Datenbank und ein zweites Modul 506 zum Empfangen mindestens eines Bildes, das zumindest Teile des mindestens einen Straßenabschnitts zeigt, sind übern ein oder mehrere Bussysteme 514 kommunikativ miteinander verbunden. Das eine oder die mehreren Bussysteme 514 verbinden außerdem ein drittes Modul 508 zum Überlagern der mindestens einen Trajektorie mit dem mindestens einen Bild, ein viertes Modul 510 zum Analysieren des mindestens einen Bildes in einem Korridor der sich entlang der Trajektorie erstreckt und diese einschließt, und zum Erkennen von fahr- oder positionierungsrelevanten Merkmalen des Straßenabschnitts in dem Korridor sowie ein fünftes Modul 512 Modul zum Erzeugen des digitalen Straßenmodells aus den fahr- oder positionierungsrelevanten Merkmalen, die in dem mindestens einen anhand der mindestens einen Trajektorie ausgerichteten Bild und in dem die Trajektorie einschließenden Korridor erkannt wurden, untereinander bzw. mit dem ersten Modul 504, dem zweiten Modul 506 und/oder der Datenbank 502.

Figur 6 zeigt ein beispielhaftes Blockschaltbild eines zur Durchführung zumindest von Teilen des erfindungsgemäßen Verfahrens geeigneten Moduls 600 des Systems. Das Modul 600 umfasst einen Mikroprozessor 602, ein RAM 604, einen nicht-flüchtigen Speicher 606, eine oder mehrere Schnittstellen 608 und eine Datenbank 610, die über ein oder mehrere Bussysteme 612 kommunikativ miteinander verbunden sind. Der nichtflüchtige Speicher 606 enthält Computer-Programmanweisungen die, wenn sie von dem Mikroprozessor 602 in Verbindung mit dem Arbeitsspeicher 604 und ggf. unter Zugriff auf weitere Systemkomponenten ausgeführt werden, zumindest Teile eines oder mehrerer Aspekte des erfindungsgemäßen Verfahrens ausführen.

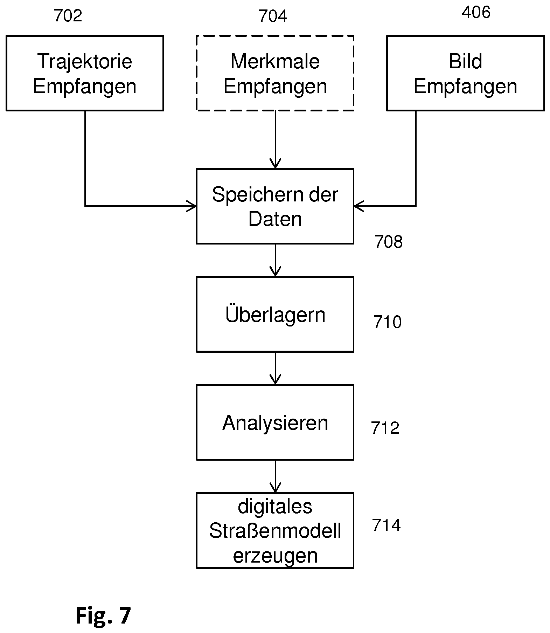

Figur 7 zeigt ein vereinfachtes beispielhaftes Flussdiagramm eines Aspekts des erfindungsgemäßen Verfahrens. Das Flussdiagramm kann dabei auch als Darstellung von Funktionsmodulen aufgefasst werden, wobei jedes Modul entsprechende Teile des Verfahrens ausführt. In Schritt oder Modul 702 wird mindestens eine Trajektorie eines Fahrzeugs für den mindestens einen Straßenabschnitt empfangen, und in Schritt oder Modul 706 wird mindestens ein Bild, das zumindest Teile des mindestens einen Straßenabschnitts zeigt und eine Perspektive aufweist, die einem von einer erhöhten Position im Wesentlichen senkrecht nach unten aufgenommenen Bild entspricht, empfangen. Im optionalen Schritt oder Modul 704 werden Informationen zu fahrrelevanten Merkmalen des Straßenabschnitts und zu jeweiligen Erfassungsorten oder -positionen empfangen und/oder es wird eine Höhenkomponente für mindestens einen Teil des Stra-ßenabschnitts empfangen oder von einer externen Datenbank abgerufen. In Schritt oder Modul 708 werden die Daten gespeichert und für die in Schritt oder Modul 710 ausgeführte Überlagerung abrufbar bereitgestellt. Eine Analyse des mindestens einen Bildes in einem Korridor, der sich entlang der Trajektorie über eine erste Distanz quer zur Trajektorie erstreckt und diese einschließt, und Erkennen von fahr- oder positionierungsrelevanten Merkmalen des Straßenabschnitts in dem Korridor erfolgt in Schritt oder Modul 712. Aus den in Schritt oder Modul 712 erkannten fahr- oder positionierungsrelevanten Merkmalen wird schließlich in Schritt oder Modul 714 ein digitales Straßenmodell erzeugt und abrufbar gespeichert.

## Patentansprüche

1. Verfahren zur Erstellung eines digitalen Straßenmodells für mindestens einen Straßenabschnitt, umfassend:
- Empfangen mindestens einer Trajektorie (102) eines Fahrzeugs für den mindestens einen Straßenabschnitt in einer fahrzeugexternen Datenbank (502),
- Empfangen mindestens eines Bildes, das zumindest Teile des mindestens einen Straßenabschnitts zeigt, wobei das Bild eine Perspektive aufweist, die einem von einer erhöhten Position im Wesentlichen senkrecht nach unten aufgenommenen Bild entspricht,
- Überlagern der mindestens einen Trajektorie (102) mit dem mindestens einen Bild dergestalt, dass die mindestens eine Trajektorie (102) mit dem Verlauf einer Straße in dem mindestens einen Bild übereinstimmt,
- Analysieren des mindestens einen Bildes in einem Korridor (104), der sich entlang der Trajektorie (102) erstreckt und diese einschließt, und Erkennen von fahr- oder positionierungsrelevanten Merkmalen des Straßenabschnitts in dem Korridor (104),
- Erzeugen des digitalen Straßenmodells aus den fahr- oder positionierungsrelevanten Merkmalen, die in dem mindestens einen anhand der mindestens einen Trajektorie (102) ausgerichteten Bild und in dem die Trajektorie (102) einschließenden Korridor (104) erkannt wurden.

2. Verfahren nach Anspruch 1, außerdem umfassend:
- Empfangen von Informationen zu durch das Fahrzeug erfassten fahr- oder positionierungsrelevanten Merkmalen des Straßenabschnitts, wobei die Merkmale mit Informationen zu jeweiligen Erfassungsorten oder -positionen versehen sind.

3. Verfahren nach Anspruch 2, wobei die Informationen zu Merkmalen des Straßenabschnitts in einem objektbeschreibenden Vektorformat empfangen werden.

4. Verfahren nach Anspruch 3, wobei für jedes durch das objektbeschreibende Vektorformat repräsentierte Merkmal mindestens ein Referenzpunkt bestimmt wird.

5. Verfahren nach Anspruch 1, wobei eine Höhenkomponente für Abschnitte des digitalen Straßenmodells aus Daten der mindestens einen Trajektorie (102), aus einer Topographiedatenbank oder einem digitalen Höhenmodell ergänzt wird.

6. System zur Erstellung eines digitalen Straßenmodells für mindestens einen Straßenabschnitt, umfassend:
- eine Datenbank (502) zum abrufbaren Speichern von Trajektorien (102) und Bildern,
- ein erstes Modul (504) zum Empfangen mindestens einer Trajektorie (102) eines Fahrzeugs für den mindestens einen Straßenabschnitt und zum Speichern der mindestens einen Trajektorie (102) in der Datenbank (502),
- ein zweites Modul (506) zum Empfangen mindestens eines Bildes, das zumindest Teile des mindestens einen Stra-ßenabschnitts zeigt, wobei das Bild eine Perspektive aufweist, die einem von einer erhöhten Position im Wesentlichen senkrecht nach unten aufgenommenen Bild entspricht, und zum Speichern des mindestens einen Bildes in der Datenbank (502),
- ein drittes Modul (508) zum Überlagern der mindestens einen Trajektorie (102) mit dem mindestens einen Bild dergestalt, dass die mindestens eine Trajektorie (102) mit dem Verlauf einer Straße in dem mindestens einen Bild übereinstimmt,
- ein viertes Modul (510) zum Analysieren des mindestens einen Bildes in einem Korridor (104) der sich entlang der Trajektorie (102) erstreckt und diese einschließt, und Erkennen von fahr- oder positionierungsrelevanten Merkmalen des Straßenabschnitts in dem Korridor (104),
- ein fünftes Modul (512) zum Erzeugen des digitalen Straßenmodells aus den fahr- oder positionierungsrelevanten Merkmalen, die in dem mindestens einen anhand der mindestens einen Trajektorie (102) ausgerichteten Bild und in dem die Trajektorie (102) einschließenden Korridor (104) erkannt wurden.

7. System nach Anspruch 6, außerdem umfassend:
- ein sechstes Modul zum Empfangen von Informationen zu durch das Fahrzeug erfassten fahr- oder positionierungsrelevanten Merkmalen des Straßenabschnitts, wobei die Merkmale mit Informationen zu jeweiligen Erfassungsorten oder -positionen versehen sind.

8. System nach Anspruch 6, außerdem umfassend:
- ein siebtes Modul zum Extrahieren einer Höhenkomponente für Abschnitte des digitale Straßenmodells aus Daten der mindestens einen Trajektorie (102), aus einer Topographiedatenbank oder einem digitalen Höhenmodell, und zum entsprechenden Ergänzen der Abschnitte des digitalen Straßenmodells um die Höhenkomponente.

## Claims

1. Method for creating a digital road model for at least one road section, comprising:
- receiving at least one trajectory (102) of a vehicle for the at least one road section in a database (502) outside the vehicle,
- receiving at least one image which shows at least parts of the at least one road section, wherein the image has a perspective which corresponds to an image recorded from an elevated position substantially vertically downwards,
- superimposing the at least one image on the at least one trajectory (102) in such a manner that the at least one trajectory (102) corresponds to the course of a road in the at least one image,
- analysing the at least one image in a corridor (104) which extends along the trajectory (102) and encloses the latter, and identifying driving-relevant or positioning-relevant features of the road section in the corridor (104),
- generating the digital road model from the driving-relevant or positioning-relevant features which have been identified in the at least one image aligned on the basis of the at least one trajectory (102) and in the corridor (104) enclosing the trajectory (102).

2. Method according to Claim 1, additionally comprising:
- receiving information relating to driving-relevant or positioning-relevant features of the road section which are captured by the vehicle, wherein the features are provided with information relating to respective capture locations or positions.

3. Method according to Claim 2, wherein the information relating to features of the road section is received in an object-describing vector format.

4. Method according to Claim 3, wherein at least one reference point is determined for each feature represented by the object-describing vector format.

5. Method according to Claim 1, wherein an elevation component for sections of the digital road model is supplemented with data relating to the at least one trajectory (102), from a topography database or from a digital elevation model.

6. System for creating a digital road model for at least one road section, comprising:
- a database (502) for retrievably storing trajectories (102) and images,
- a first module (504) for receiving at least one trajectory (102) of a vehicle for the at least one road section and for storing the at least one trajectory (102) in the database (502),
- a second module (506) for receiving at least one image which shows at least parts of the at least one road section, wherein the image has a perspective which corresponds to an image recorded from an elevated position substantially vertically downwards, and for storing the at least one image in the database (502),
- a third module (508) for superimposing the at least one image on the at least one trajectory (102) in such a manner that the at least one trajectory (102) corresponds to the course of a road in the at least one image,
- a fourth module (510) for analysing the at least one image in a corridor (104) which extends along the trajectory (102) and encloses the latter and for identifying driving-relevant or positioning-relevant features of the road section in the corridor (104),
- a fifth module (512) for generating the digital road model from the driving-relevant or positioning-relevant features which have been identified in the at least one image aligned on the basis of the at least one trajectory (102) and in the corridor (104) enclosing the trajectory (102).

7. System according to Claim 6, additionally comprising:
- a sixth module for receiving information relating to driving-relevant or positioning-relevant features of the road section which are captured by the vehicle, wherein the features are provided with information relating to respective capture locations or positions.

8. System according to Claim 6, additionally comprising:
- a seventh module for extracting an elevation component for sections of the digital road model from data relating to the at least one trajectory (102), from a topography database or from a digital elevation model and for accordingly supplementing the sections of the digital road model with the elevation component.

## Revendications

1. Procédé pour créer un modèle de route numérique pour au moins une portion de route, comprenant :
- réception d'au moins une trajectoire (102) d'un véhicule pour l'au moins une portion de route dans une base de données (502) externe au véhicule,
- réception d'au moins une image, qui montre au moins des parties de l'au moins une portion de route, l'image présentant une perspective qui correspond à une image capturée depuis une position élevée sensiblement verticalement vers le bas,
- superposition de l'au moins une trajectoire (102) avec l'au moins une image de telle sorte que l'au moins une trajectoire (102) coïncide avec le tracé d'une route dans l'au moins une image,
- analyse de l'au moins une image dans un corridor (104) qui s'étend le long de la trajectoire (102) et englobe celle-ci, et reconnaissance de caractéristiques relatives au déplacement ou au positionnement de la portion de route dans le corridor (104),
- génération du modèle de route numérique à partir des caractéristiques relatives au déplacement ou au positionnement qui ont été reconnues dans l'au moins une image orientée à l'aide de l'au moins une trajectoire (102) et dans le corridor (104) qui englobe la trajectoire (102).

2. Procédé selon la revendication 1, comprenant en outre :
- réception d'informations à propos des caractéristiques relatives au déplacement ou au positionnement de la portion de route acquises par le véhicule, les caractéristiques étant pourvues d'informations à propos des lieux ou des positions d'acquisition respectives.

3. Procédé selon la revendication 2, les informations à propos des caractéristiques de la portion de route étant reçues dans un format vectoriel décrivant l'objet.

4. Procédé selon la revendication 3, au moins un point de référence étant déterminé pour chaque caractéristique représentée par le format vectoriel décrivant l'objet.

5. Procédé selon la revendication 1, une composante de hauteur pour les portions du modèle de route numérique étant complétée à partir de données de l'au moins une trajectoire (102), à partir d'une base de données topographique ou d'un modèle de hauteur numérique.

6. Système pour créer un modèle de route numérique pour au moins une portion de route, comprenant :
- une base de données (502) destinée à enregistrer de manière consultable des trajectoires (102) et des images,
- un premier module (504) destiné à recevoir au moins une trajectoire (102) d'un véhicule pour l'au moins une portion de route et à enregistrer l'au moins une trajectoire (102) dans la base de données (502),
- un deuxième module (506) destiné à recevoir au moins une image, laquelle montre au moins des parties de l'au moins une portion de route, l'image présentant une perspective qui correspond à une image capturée depuis une position élevée sensiblement verticalement vers le bas, et à enregistrer l'au moins une image dans la base de données (502),
- un troisième module (508) destiné à superposer l'au moins une trajectoire (102) avec l'au moins une image de telle sorte que l'au moins une trajectoire (102) coïncide avec le tracé d'une route dans l'au moins une image,
- un quatrième module (510) destiné à analyser l'au moins une image dans un corridor (104) qui s'étend le long de la trajectoire (102) et englobe celle-ci, et à reconnaître des caractéristiques relatives au déplacement ou au positionnement de la portion de route dans le corridor (104),
- un cinquième module (512) destiné à générer le modèle de route numérique à partir des caractéristiques relatives au déplacement ou au positionnement qui ont été reconnues dans l'au moins une image orientée à l'aide de l'au moins une trajectoire (102) et dans le corridor (104) qui englobe la trajectoire (102).

7. Système selon la revendication 6, comprenant en outre :
- un sixième module destiné à recevoir des informations à propos des caractéristiques relatives au déplacement ou au positionnement de la portion de route acquises par le véhicule, les caractéristiques étant pourvues d'informations à propos des lieux ou des positions d'acquisition respectives.

8. Système selon la revendication 6, comprenant en outre :
- un septième module destiné à extraire une composante de hauteur pour les portions du modèle de route numérique à partir de données de l'au moins une trajectoire (102), à partir d'une base de données topographique ou d'un modèle de hauteur numérique, et à compléter en conséquence les portions du modèle de route numérique avec la composante de hauteur.
